# EUROPEAN PATENT APPLICATION

(11) **EP 1 842 435 A1**
(43) Date of publication of application: **10.10.2007**
(21) Application number: 06712174.9
(22) Date of filing: 23.01.2006
(51) Int. Cl.: A23L 1/217, A23G 3/00, A23G 3/34

(54) **POTATO STICK CANDY AND PROCESS FOR PRODUCING THE SAME**

(30) Priority: 26.01.2005 JP 2005018261
(71) Applicant: Ezaki Glico Co., Ltd., Osaka-shi, Osaka 555-8502 (JP)
(72) Inventor: HOSOKAWA, Seiji, 638122 (JP); HONDA, Masahiro, Hyogo, 6610033 (JP); FURUYASHIKI, Takashi, shi, Hyogo, 6610026 (JP)
(74) Representative: Smyth, Gyles Darren
(86) International application number: PCT/JP2006/300958
(87) International publication number: WO 2006/080274

(57) **Abstract**

A novel potato stick that allows to enjoy a flavor inherent to potato. In particular, there is a potato stick obtained by baking a stick dough comprising potato granules, a cold-water gelatinized starch having a maximum swelling power of 30 or more, a non-reducing sugar and the fat or oil and impregnating the baking product with a fat or oil amounting to 15 to 40% by weight based on the weight of the baking product.

## Description

### Technical Field

The present invention relates to a novel potato stick and a process for producing the same and a baked potato stick body.

### Background Art

Conventionally, it is common that stick potato is produced by frying or puffing (Patent document 1).

However, in the production of the stick potato by frying, a special apparatus, e.g., a reduced pressure frying apparatus for preventing burnt deposit upon frying or a special fryer for frying with keeping a straight shape is required. In the production of the stick potato by puffing, the apparatus such as a high pressure extruder is required. These have been inconvenient.

Also in the production of the stick potato by frying, there have been problems, e.g., becoming oily, being easily oxidized and getting heat bump easily. In the cases of puffing and baking, the burnt deposit is easily gotten due to Maillard reaction. In the case of baking, the heat bump is easily gotten, a long baking time is easily required because moisture is hardly scattered, even if a fat or oil is added, it is not sufficiently impregnated, and thus, it has been difficult to obtain palatability of potato as a snack.

Furthermore, when dry potato such as a potato flake or a potato granule is used for a raw material, dry matter smell and a bitter taste of the dry potato occur, and it has been difficult to enjoy a flavor inherent to the potato. To solve this, the method of using a raw potato raw material is also available, but storage of the raw material is bothersome, and further, this is disadvantageous in terms of cost and workability because a pretreatment is required.
Patent document 1: JP Hei-6-62788-A

### DISCLOSURE OF THE INVENTION

### PROBLEMS TO BE SOLVED BY THE INVENTION

It is an object of the present invention to improve the above shortcomings and provide a novel potato stick that allows to enjoy a flavor inherent to potato using dry potato without frying and without requiring a special raw material and an equipment, and a baked potato stick body.

It is another object of the present invention to provide a process for producing a potato stick having less burnt deposit and heat bump compared with conventional baked potato snacks, where since a fat or oil is sufficiently impregnated even if the fat or oil is added later, sufficient palatability can be obtained.

### MEANS FOR SOLVING THE PROBLEMS

[1] A potato stick impregnating a baking product of a stick dough comprising potato granules, a cold-water gelatinized starch having a maximum swelling power of 30 or more, a non-reducing sugar and a fat or oil, with a fat or oil at 15 to 40% by weight based on the baking product.
[2] The potato stick according to [1] wherein the dough comprises 5 to 30 parts by weight of the non-reducing sugar and 5 to 30 parts by weight of the fat or oil based on 100 parts by weight summed up 70 to 95 parts by weight of the potato granules and 30 to 5 parts by weight of the cold-water gelatinized starch having the maximum swelling power of 30 or more.
[3] The potato stick according to [1] or [2] wherein the dough comprises 7 to 30 parts by weight of the non-reducing sugar and 5 to 30 parts by weight of the fat or oil based on 100 parts by weight summed up 70 to 95 parts by weight of the potato granules and 30 to 5 parts by weight of the cold-water gelatinized starch having the maximum swelling power of 30 or more.
[4] The potato stick according to any of [1] to [3] wherein the non-reducing sugar is trehalose.
[5] The potato stick according to any of [1] to [4] wherein the potato stick has a diameter of 3 to 12 mm and a length of 40 to 150 mm.
[6] The potato stick according to any of [1] to [5] having a hollow shape.
[7] A process for producing a potato stick comprising steps of
   (i) mixing potato granules, a cold-water gelatinized starch having a maximum swelling power of 30 or more, a non-reducing sugar, a fat or oil and water to mold a stick dough;
   (ii) baking the stick dough in an oven at high temperature of 150°C or above until moisture is 3% or more and 20% or less;
   (iii) further drying at 80°C or above and lower than 150°C until the moisture is 0.1% or more and less than 3%; and
   (iv) adding the fat or oil (topping 15 to 40% by weight based on a baking product) to the baking product later to impregnate the baking product with the fat or oil.
[8] A baked potato stick body obtained by baking a stick dough comprising potato granules, a cold-water gelatinized starch having a maximum swelling power of 30 or more, a non-reducing sugar and a fat or oil.

### EFFECTS OF THE INVENTION

The stick potato produced by the present invention becomes possible for the first time by combining the potato granule which is the dry potato having a lower gelatinized degree compared with the potato flake, the cold-water gelatinized starch having the larger swelling power, the non-reducing sugar and the fat or oil. The moisture is rapidly evaporated upon baking, and the stick is swelled to become a bolus.

This swelling allows lots of the fat or oil to impregnate after baking.

In the conventional production method by frying, the fat or oil is deteriorated during the frying because the fat or oil is heated at high temperature. In the present invention, the fat or oil is added at lower temperature after baking compared with the frying. Thus, less deterioration of the fat or oil occurs, the quality as the product is enhanced and storage stability is enhanced.

The addition of the fat or oil is essential for eliciting the palatability of potato candies, and the method for impregnating the baked potato (not fried or puffed) with the fat or oil as smoothly as the fried potato has been realized for the first time by the present invention.

By containing the non-reducing sugar and the fat or oil in the mixed dough, it has become possible to smoothly evaporate the moisture in the dough without producing the heat bump and to reduce a flavor change due to the burnt deposit with increasing the productivity.

According to the present invention, it is possible to allow to enjoy the flavor inherent to the potato although the dry potato is used compared with the conventional baked potato snacks, obtain the sufficient palatability because the fat or oil is smoothly impregnated even if the fat or oil is added later, and further provide the novel potato stick with less heat bump, suitable for mass production and processing without requiring the special raw material, apparatus and the complicated step.

### BEST MODES FOR CARRYING OUT THE INVENTION

As the potato granules used for the potato stick of the present invention, it is possible to use those generally distributed as processed products of potato. As the potato granules, it is possible to use those obtained by once soaking the sufficiently dry potato granules in water to make steamed potato having a water content (35 to 45%) at which the potato can be pulverized without disrupting cells, mixing (at that time, a fixation procedure of free amylose by monoglyceride may be combined) and pulverizing not to disrupt the cells and drying again not to bind and aggregate.

The method for producing the potato granules referred to herein is well-known in the art, and described in, for example, "Potato Processing" 4th Edition, Eds. W. S. Talburt and O. Smith, AVI, USA, 1987.

The potato flake which is another dry potato raw material generally distributed can be used in the range in which the object of the present invention is not inhibited, but when its amount to be used is large, viscoelasticity of the mixed dough is high, molding easily becomes difficult, and further the evaporation of the moisture is reduced to easily prolong a baking time period.

The cold-ice gelatinized starch is the starch which becomes sticky paste when mixed with water at ambient temperature, preferably the starch having the maximum swelling power of 30 or more (e.g., gelatinized potato starch, gelatinized tapioca starch), and one or two or more can be selected to use if necessary. The "starch" in the cold-water gelatinized starch referred to herein is not only 100% pure starch as the substance but also may contain about 20% by weight or less, preferably 10% by weight or less, more preferably 5% by weight or less and most preferably 1% or less impurities, and widely encompasses grain powders and potatoes before separating the starch. A type of the cold-water gelatinized starch is not particularly limited as long as the maximum swelling power is 30 or more. For example, maize starch, potato starch, sweet potato starch, tapioca starch, rice starch and wheat starch (including processed starches thereof) are included. In the potato starch and the tapioca starch generally having the high swelling power, when a processing treatment such as crosslinking is given, the swelling power is sometimes lowered. Thus a caution is required. The method for producing the cold-water gelatinized starch is well-known in the art. The cold-water gelatinized starch is obtained by combining usual starches and grain powders which do not become sticky paste when mixed with water at ambient temperature, with water, heating the mixture or pressurizing and heating the mixture using an extruder to make sticky paste, and subsequently drying using a spray drying or drum drying method.

The "maximum swelling power" referred to herein refers to a gram number of water absorbed by 1 g of starch particles upon heating. The method for measuring the maximum swelling power is based on the method described in the reference, LEACH, H.W., McCOWEN, L. D., and SCHOCH, T. J. Structure of the starch granule. I. Swelling and solubility patterns of various starches. Cereal Chem. 36:534-544 (1959). The preferable cold-water gelatinized starch of the present invention is the cold-water gelatinized starch of the potato starch or the tapioca starch. The maximum swelling power is 30 or more and preferably 50 or more.

When the cold-water gelatinized starch has the maximum swelling power of less than 30, the swelling upon baking is small, shrinkage generally referred to as an iron pot omission is observed after the baking, an eating texture and a visual effect are lowered as well as an impregnation degree of the fat or oil added after baking easily becomes low.

The non-reducing sugars referred to herein are the sugars having no free aldehyde and ketone groups and exhibiting no reductive property, and classified into trehalose type oligosaccharides where reducing groups are bound each other, glycosides where the reducing group of the sugar is bound to a non-sugar, and sugar alcohol where the sugar is reduced by hydrogenating. Any of them can be suitably used in the present invention. The non-reducing sugar referred to herein is not only 100% pure non-reducing sugar but also may contain about 10% by weight or less, preferably 5% by weight or less and more preferably 1% or less impurities, and encompasses decomposed starches such as starch syrup and dextrin having DE 30 or less. These non-reducing sugars can be used alone or in combination of two or more. By adding the non-reducing sugar, it is possible to prevent the occurrence of burnt deposit and heat bump, and the moisture is evaporated well.

The trehalose type oligosaccharides include, for example, sucrose and trehalose. The glycosides include, for example, alkyl glycosides, phenol glycosides and mustard oil glycosides. The sugar alcohols include, for example, D, L-arabit, rebit, xylit, D, L-sorbit, D, L-mannit, D, L-idit, D, L-talit, dulicit and allodulcit. Furthermore, maltitol obtained by hydrogenating to maltose of disaccharide and reduced bodies (reduced starch syrup) obtained by hydrogenation of oligosaccharides are suitably included. Among these non-reducing sugars, the sugar alcohol is known to easily cause transient diarrhea due to large amount ingestion, the trehalose type oligosaccharides are preferable, further, sucrose is highly sweet and is hardly combined with the flavor of potato, and thus trehalose is more preferable.

Dextrin can be obtained by degrading the starch (e.g., maize starch, potato starch. sweet potato starch, tapioca starch, rice starch and wheat starch) with an acid, an alkali or an enzyme using methods known publicly, and commercially available products such as TK16 (brand name) (supplied from Matsutani Chemical Industry Co., Ltd.) may be used. Dextrin referred to herein has DE 30 or less, and preferably dextrin having DE 20 or less is suitably used. DE is an indicator indicating hydrolysis of the starch, and means a dextrose equivalent. DE is calculated by the following formula: DE = Direct reducing sugar (displayed as glucose)/Solid content x 100.

When the reducing sugar or dextrin having DE of more than 30 is used, browning due to Maillard reaction occurs easily, burnt deposit smell and bitter taste occur, and the flavor inherent to the potato is hardly obtained.

The fat or oil used for the mixed dough widely includes various plant and/or animal fats and oils e.g., shortening, margarine, butter, lard, salad oil, corn oil and powder fats and oils. In order to enhance the flavor and melt-in-the mouth of obtained baked candies, one or two or more can be selected to use as needed.

The fat or oil applied to the baking products is not particularly limited, and plant fats or oils are preferably used. For example, representatively, palm oils, rapeseed oils, corn oils and rice oils (including processed fats or oils thereof) are included, and one or two or more can be selected to use as needed.

In order to impart the flavor to the baked product, one or two or more optional food raw materials can be selected to use as needed in addition to the aforementioned raw materials. The optional food raw materials broadly indicate food materials regardless of their forms such as raw materials, dried matters, pastes, puree and powders, for example, nuts and seeds such as peanuts, almonds, macadamia nuts, cashew nuts and chestnuts; beans such as adzuki beans, peas and soy beans; fish and shellfish such as shrimps, crabs, salmons and cod roe; stock farm products such as sausages, hams, bacons and minced meats; eggs such as raw eggs, egg white and egg yolks; milks such as cow milks, fresh creams, condensed milks, all dried milks, skim milks, cheeses and yoghurts; vegetables such as carrots, tomato and onions; fruits such as strawberries, oranges, raisons, apples, kiwi, pineapples, Japanese apricots and bananas; champignons such as shiitake mushrooms and mushrooms; seaweeds such as green laver, dried kelp and brown seaweeds; liking beverages such as coffee, tea, cocoa, beer and wine; and seasonings and spices such as table salts, clear soup, soy sauce, sauce, curry powder, pepper and cinnamon.

For the purpose of controlling the eating texture, the physical property, the flavor and the appearance, the use of food additives is not particularly limited. For example, an emulsifier can be used to improve the physical property and soften the eating texture in the mixed dough. A toughening agent can be used to nutritionally toughen or a coloring agent can be used to obtain an objective color.

The potato granules and the cold-water gelatinized starch in the mixed dough are combined at a ratio of the potato granules to the cold-water gelatinized starch of 70 to 95 parts by weight : 30 to 5 parts by weight, and preferably 80 to 90 parts by weight : 20 to 10 parts by weight (total 100 parts by weight). At such a ratio, the eating texture of the baking product is good, the moisture is evaporated well, and the dough is well-cohesive and molded well. When the amount of the cold-water gelatinized starch is too small, the dough is poor in cohesiveness, the dough is poor in molding and further the stick after baking easily breaks. When the amount of the cold-water gelatinized starch is too large, a potato feeling is reduced because the amount of potato is relatively decreased, the viscoelasticity of the dough becomes high and the molding property becomes poor, the evaporation of moisture is reduced upon baking to take a long time, and the heat bump easily occurs.

The non-reducing sugar and the fat or oil can be combined at the following ratio based on the total 100 parts by weight of the potato granules and the cold-water gelatinized starch: non-reducing sugar: 5 to 32 parts by weight preferably 7 to 30 parts by weight; fat or oil: 5 to 30 parts by weight.

When the ratio of the non-reducing sugar is too high, sweetness is strong, the eating texture is hard and becomes glassy. When the ratio of the non-reducing sugar is too low, the heat bump easily occurs and the evaporation of moisture is easily decreased.

When the ratio of the fat or oil is too high, the dough is fragile after the baking whereas when it is too low, a drying smell of potato easily occurs and the evaporation of moisture is easily decreased.

Subsequently, the process for producing the potato stick will be described.

Step (i): The potato granules, the cold-water gelatinized starch, the non-reducing sugar, the fat or oil, water and if necessary taste raw materials are mixed to form the dough into the stick shape.

Specifically, the potato granules, the cold-water gelatinized starch, the non-reducing sugar and the fat or oil are combined at the above ratios, the water and if necessary the taste raw material are added thereto and mixed, and the mixture can be molded into the stick shape according to standard methods using for example, a uniaxial or biaxial extruder. The water at 50 to 300 parts by weight and preferably 100 to 200 parts by weight can be used based on 100 parts by weight summed up the potato granules and the cold-water gelatinized starch.

When the amount of the water is too large, the mixed dough clags to make handling after molding poor and a baking time period is prolonged because of decreased evaporation of moisture. When it is too small, the mixed dough is poor in cohesiveness and is hardly to be molded.

Step (ii): Step of baking the stick-shaped dough in an oven at high temperature of 150°C or above until the moisture content becomes 3% or more and 20% or less.

A baking temperature is preferably about 150°C or above and about 400°C or below. The oven well-known to those skilled in the art is not particularly limited, and may be any of a continuous oven or a batch oven. For example, as a heat source, a gas oven or an electric oven may be used, and as a mode, a direct oven, an indirect oven or a convection oven may be used. When the baking temperature is lower than 150°C, a long time is required for baking. When it is higher than 400°C, the burnt deposit and the browning on the surface easily occur. When the stick-shaped molded dough is baked at high temperature of 150°C or above until the moisture content becomes less than 3%, the dough is browned and an astringent taste and the bitter taste occur easily.

Step (iii): Step of further drying the dough at 80°C or above and lower than 150°C until the moisture content becomes 0.1 to 3%.

In order to prevent the astringent taste and the bitter taste of potato due to the burnt deposit and browning, when it is difficult to decrease the moisture content to 3% without strongly browning, it is preferable that the drying step of drying the baking product at 80°C or above and lower than 150°C, preferably 100°C or above and lower than 130°C is further performed after the baking step at 150°C or above and subsequently the fat or oil is applied. The optional method well-known to those skilled in the art, e.g., a high frequency dryer in addition to a hot wind dryer can be used. For example, it is preferable to bake (220°C) in the batch oven until the color slightly appears (moisture content 10%) and then finish to the moisture content of 0.4% using the hot wind dryer (105°C). In the continuous oven, the dough is baked by controlling not to generate the astringent taste and the bitter taste of potato due to the browning appropriately using a temperature curve and a convection fan, and the drying may also be done together in the baking step. When the moisture content in the final baking (dried) product is too high, the objective snack-like eating texture is not obtained, and the strength is easily lowered and the baking product is easily cracked several hours to several days after the baking, which is referred to as a checking. The moisture content could be measured using the method well-known to those skilled in the art, and for example, a simple moisture content measurement using an infrared moisture meter, which is a drying loss method could be used.

The shape of the obtained stick potato is not particularly limited, preferably the diameter is 3 to 12 mm and the length is 30 mm to 150 mm, and more preferably, the diameter is 4 to 8 mm and the length is 100 to 130 mm. The stick potato may have a hollow shape obtained by extruding/molding from a double nozzle. When the diameter is too thin, the stick potato easily breaks, and when it is too thick, the moisture is hardly evaporated. When the stick potato is too short, easiness and pleasure to eat by holding the stick in the hand is weakened, and when it is too long, the stick easily breaks in the packing step and upon transport. By making into the stick shape, differently from usual chip shapes, the stick is easily held by the hand, the stick is easily eaten without dropping in pieces, and the eating texture inherent to the stick can be enjoyed.

Step (iv): Step of adding later the fat or oil (topping 15 to 40% by weight based on the baking product) and if necessary the taste raw material to the baking product and impregnating the baking product with the fat or oil.

The amount of the fat or oil to be applied to the baking product is 15 to 40 parts by weight and preferably 20 to 35 parts by weight based on 100 parts by weight of the baking product obtained by baking the stick-shaped dough and further drying it if necessary. When the amount of the fat or oil is too large, a fatty feeling is increased, and when it is too small, the potato feeling is reduced and the dry matter smell remains easily. In order to smoothly impregnate with the fat or oil, it is efficient to impregnate when the temperature of the baking product is high, immediately after exiting from the oven or the drying step. It is also preferable to warm the fat or oil to the temperature at 40 to 90°C before the use. The addition of the fat or oil is not particularly limited, and could be performed by the method well-known to those skilled in the art, e.g., a spray method. The baking product of the present invention is smoothly impregnated with the fat or oil although the amount of absorbed oil is large. When it is difficult to impregnate with the fat or oil, the flavor is impaired as described above, additionally, the surface of the baking product becomes oily and is smeary when held by the hand, and troubles often occur in the packing step, e.g., poor sliding upon feeding.

### EXAMPLES

The present invention will be described in detail below using Examples, but the present invention is not limited to these Examples.

In Examples, the "part" means the "part by weight".

Combined ratios (parts by weight) in Tables 1 to 3 are the ratios based on 100 parts by weight summed up the potato granules and the cold-water gelatinized starch. For example, when 30 parts by weight of the non-reducing sugar (various starches, trehalose, maltitol, dextrin) or the fat or oil (shortening) is used based on 100 parts by weight summed up the potato granules and the cold-water gelatinized starch having the maximum swelling power of 30 or more, the amount is displayed as 30 parts.

### Example 1: study on cold-water gelatinized starch

The potato granules (100 to 55 parts), the cold-water gelatinized starch (0 to 45 parts) (but, the total of the potato granules and the cold-water gelatinized starch is 100 parts), 20 parts of trehalose, 10 parts of the shortening and 5 parts of cheddar cheese powder were mixed, then water was added and mixed to afford a dough. This was extruded using a biaxial extruder to afford a potato stick molded dough. This was baked in a batch oven (220°C), dried using a hot wind dryer (105°C) until the moisture content was 0.4%, and subsequently coated with oil (35 parts of plant fat or oil, 1.1 parts of table salt and 0.3 parts of sodium glutamate based on 100 parts of the baking product).

For the resulting potato stick product, a molding property, an eating texture, a flavor and a shape were totally evaluated on a scale of A to D. The results are shown in Table 1. A: very good, B: almost good, C: slightly inferior, D: largely inferior.

**Table 1**

| Cold-water gelatinized starch | Maximum swelling power | Combination ratio (parts) | | | | |
|---|---|---|---|---|---|---|
| | | 0 No addition | 5 | 15 | 30 | 45 |
| α-Tapioca starch | 70 | D | A | A | A | C |
| α-Potato starch | >80 | D | A | A | A | C |
| α-Waxy corn starch | 50 | D | B | B | B | C |
| α-Crosslinked waxy corn starch | 25 | D | D | C | C | D |

For α-tapioca starch, α-potato starch, α-waxy corn starch and α-crosslinked waxy corn starch, good results were obtained in the range of 5 to 30%. In the cases of less than 5%, the dough was poor in cohesiveness and molding property, and further the stick after the baking tended to break. In the cases of more than 30%, the potato feeling was weakened because the combination ratio of potato was relatively decreased, the viscoelasticity and the molding property of the dough became poor, the long time was required for reducing the moisture because the evaporation of moisture was poor upon baking, and the heat bump easily occurred. In the α-crosslinked waxy corn starch having the maximum swelling power of 25, the gelatinization after the baking, the shape and the eating texture were slightly inferior.

### Example 2: Study on sugar

Combination: 85 parts of potato granules, 15 parts of potato starch, 0 to 45 parts of sugar, 10 parts of shortening and 5 parts of cheddar cheese powder.

A potato stick product was obtained by baking, drying and then oil-coating a potato stick molded dough in the same way as in Example 1. For the resulting products, the evaporation of moisture, the eating texture, the flavor and a degree of browning were evaluated on the scale of A to D. The results are shown in Table 2
A: very good, B: almost good, C: slightly inferior, D: largely inferior.

**Table 2**

| Sugar | Combination ratio (parts) | | | | |
|---|---|---|---|---|---|
| | 0 No addition | 5 | 15 | 30 | 45 |
| Trehalose | D | B | A | A | D |
| Maltitol | D | B | B | B | D |
| TK16 (DE16) | D | B | B | B | D |
| Maltose (DE50) | D | C | C | C | D |

For trehalose, maltitol and TK16 (dextrin having DE16), the good results were obtained in the range of 5 to 30%. In the case of less than 5%, the evaporation of the moisture was poor. In the case of more than 30%, the sweetness became strong and the potato feeling tended to decrease.

In maltose which was the reducing sugar at 5 to 30% by weight, although water escape was good, the browning easily occurred and the flavor of burned potato was generated.

### Example 3: Study on combination ratio of shortening

Combination: 85 parts of potato granules, 15 parts of α-potato starch, 20 parts of trehalose, 0 to 40 parts of shortening and 5 parts of cheddar cheese powder

A potato stick product was obtained by baking, drying and then oil-coating a potato stick molded dough in the same way as in Example 1. For the resulting products, the evaporation of the moisture, the eating texture, the flavor and a breaking strength were totally evaluated on the scale of A to D. The results are shown in Table 3.
A: very good, B: almost good, C: slightly inferior, D: largely inferior.

**Table 3**

| Combination ratio (% by weight) | 0 | 1 | 5 | 10 | 20 | 30 | 40 |
|---|---|---|---|---|---|---|---|
| Evaluation | D | C | A | A | A | B | D |

For the shortening, the good results were obtained in the range of 5 to 30%. In the case of less than 5%, the evaporation of the moisture and the melt-in-the mouse were inferior and the dry matter smell occurred. In the case of more than 30%, the stick dough was easily deformed and broken after the baking. Example 4 and Comparative Example 1: Sensory evaluation results of products

The potato granules (85 parts), 15 parts of α-potato starch, 20 parts of trehalose, 10 parts of the shortening and 5 parts of the cheddar cheese powder were mixed, subsequently the water was added and mixed to afford a dough. This was extruded using the biaxial extruder to afford a potato stick molded dough. This was baked in the batch oven (220°C), dried using the hot wind dryer (105°C) until the moisture content was 0.4%, and subsequently coated with oil (35 parts of plant fat or oil, 1.1 parts of table salt and 0.3 parts of sodium glutamate based on 100 parts of the baking product). As Comparative Example 1, a commercially available potato stick product (using raw potato) was used. For the potato sticks in Example 4 and Comparative Example 1, the sensory evaluation was performed concerning the following parameters. The results are shown in Table 4.

Sensory evaluation: tasting evaluation by five panelists (average using 5 as the maximum)

**Table 4**

| Sensory evaluation parameter | Example 4 | Comparative Example 1 |
|---|---|---|
| Eating texture | 4.6 | 3.4 |
| Flavor | 4.4 | 3.4 |

The evaluation parameters are as follows.
5. Very excellent
4. Excellent
3. Ordinary
2. Slightly inferior
1. Largely inferior.

Compared with the potato stick in Comparative Example 1, the potato stick in Example 4 had the light eating texture and was easily eaten lightly.

Compared with the potato stick in Comparative Example 1, in the potato stick in Example 4, the potato flavor was felt more strongly.

### Example 5: Study on amount of combined trehalose

For trehalose from which the best evaluation was obtained in Example 2, the amount to be combined was evaluated in detail.

Specifically, 0, 3, 5, 7, 10, 20, 28, 30 or 32 parts of trehalose and 5 parts of cheddar cheese powder were used for 85 parts of the potato granules, 15 parts of α-potato starch and 10 parts of the shortening, and the eating texture, the flavor and the shape were evaluated on the scale of A to D.
A: very good, B: almost good, C: slightly inferior, D: largely inferior.

The results are shown in Table 5

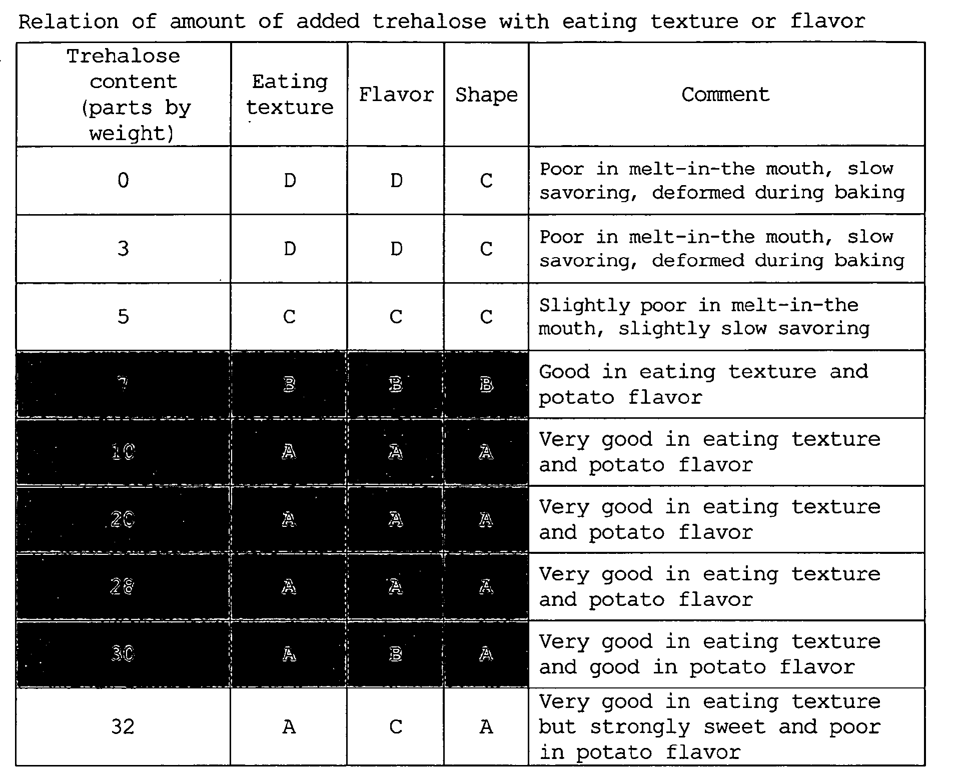

At around 5 parts by weight of trehalose, the eating texture, the flavor and the shape were largely changed, and the cases of more than 7 parts by weight of trehalose are particularly preferable. Also at around 30 parts by weight of trehalose, the potato flavor was largely changed, and the cases of 30 parts by weight or less of trehalose were found to be desirable. From the above results, it was demonstrated that it was desirable to use 5 to 32 parts by weight of trehalose, particularly 7 to 30 parts by weight of trehalose based on 100 parts by weight summed up 70 to 95 parts by weight of the potato granules and 30 to 5 parts by weight of the cold-water gelatinized starch having the maximum swelling power of 30 or more.

## Claims

1. A potato stick impregnating a baking product of a stick dough comprising potato granules, a cold-water gelatinized starch having a maximum swelling power of 30 or more, a non-reducing sugar and a fat or oil with a fat or oil at 15 to 40% by weight based on the baking product.

2. The potato stick according to claim 1 wherein said dough comprises 5 to 30 parts by weight of the non-reducing sugar and 5 to 30 parts by weight of the fat or oil based on 100 parts by weight summed up 70 to 95 parts by weight of the potato granules and 30 to 5 parts by weight of the cold-water gelatinized starch having the maximum swelling power of 30 or more.

3. The potato stick according to claim 1 wherein said dough comprises 7 to 30 parts by weight of the non-reducing sugar and 5 to 30 parts by weight of the fat or oil based on 100 parts by weight summed up 70 to 95 parts by weight of the potato granules and 30 to 5 parts by weight of the cold-water gelatinized starch having the maximum swelling power of 30 or more.

4. The potato stick according to claim 1 wherein the non-reducing sugar is trehalose.

5. The potato stick according to claim 1 wherein the potato stick has a diameter of 3 to 12 mm and a length of 40 to 150 mm.

6. The potato stick according to claim 1 having a hollow shape.

7. A process for producing a potato stick comprising steps of
(i) mixing potato granules, a cold-water gelatinized starch having a maximum swelling power of 30 or more, a non-reducing sugar, a fat or oil and water to mold a stick dough;
(ii) baking the stick dough in an oven at high temperature of 150°C or above until moisture is 3% or more and 20% or less;
(iii) further drying at 80°C or above and lower than 150°C until the moisture is 0.1% or more and less than 3%; and
(iv) adding the fat or oil (topping 15 to 40% by weight based on a baking product) to the baking product later to impregnate the baking product with the fat or oil.

8. A baked potato stick body obtained by baking a stick dough comprising potato granules, a cold-water gelatinized starch having a maximum swelling power of 30 or more, a non-reducing sugar and a fat or oil.
